# EUROPEAN PATENT SPECIFICATION

(11) **EP 0 487 692 B1**
(45) Date of publication and mention of the grant of the patent: **13.12.1995**
(21) Application number: 91911907.3
(22) Date of filing: 18.06.1991
(51) Int. Cl.: A22C 17/02, A22B 5/20

(54) **METHOD OF, AND APPARATUS FOR, BONING A HEAD OF A SLAUGHTERED PIECE OF LIVESTOCK**
VERFAHREN UND VORRICHTUNG ZUM ENTBEINEN VON KÖPFEN EINES SCHLACHTTIERSTÜCKES
PROCEDE ET APPAREIL PERMETTANT DE DESOSSER LA TETE D'UNE PIECE DE BETAIL ABBATUE

(30) Priority: 18.06.1990 NL 9001382
(43) Date of publication of application: 03.06.1992
(73) Proprietor: STORK PROTECON-LANGEN B.V., 5349 AE 0SS (NL)
(72) Inventor: TOREN, Bauke, NL-9461 TM Gieten (NL)
(74) Representative: Smulders, Theodorus A.H.J., Ir.
(86) International application number: NL9100100
(87) International publication number: WO9119422

(56) References cited:
- EP-A- 0 197 615
- EP-A- 0 309 296
- WO-A-88/07329
- FR-A- 2 428 979
- GB-A- 2 014 430
- NL-A- 8 701 609
- US-A- 4 414 708

## Description

The invention relates to a method of boning a head of a slaughtered piece of livestock, according to the introductory part of claim 1.

Such a method is known from NL-A-8 701 609. In this method a half pig's head is positioned on a conveyor track the side along which it was cut in two facing downward. The head is then displaced approximately in the direction in which it is oriented along a pivotable arm provided with a hook shaped free end. The hook shaped end of the arm is hooked to the lower jaw halve and forces that jaw half away from the upper jaw halve as the half head is displaced along the arm.

In this method, the half head has to positioned on the conveyor track in a very stable manner and the conveyor track has to withstand all the forces exerted on the half head by the pivotable arm.

From GB-A-2 014 430 a method is known in which a half pig's head is displaced in a direction transversely to its orientation along a wedge-shaped member so that the upper and the lower jaw parts of a half pig's head are displaced along guiding surfaces of the wedge-shaped member, which guiding surfaces diverge in the direction of displacement. The wedge-shaped member moreover comprises a guide rod extending in the direction of displacement in the direction of the rearward end of the the half head for forcing the jaws apart.

A drawback of this known method is that a comparatively great force is exerted on the head, which causes the head to tilt and which pushes the head in rearward direction. Thus, the holder for holding the head and the conveyor belt are subject to a relatively heavy load, which necessitates a correspondingly heavy construction of the conveyor means and the holder and of the wedge-shaped member. Particularly the parts of the holder designed to prevent lateral tilting of the half head limit accessibility of the half head for performing further boning operations thereon, so that for further operations the head must be placed in a different holder.

The object of the invention is to provide a method in which the above-mentioned drawbacks are obviated.

This object is realized according to the invention by carrying out the method of the above identified type in accordance with the characterizing part of claim 1.

Thus, exerting a force substantially in the direction of displacement is sufficient for driving the lower and upper jaw apart. Any reaction forces transverse to the direction of transport and the pivoting plane of the jaws are reduced to a minimum. The wedge-shaped member, the holder and the conveyor means can therefore be made of comparatively light construction. Further, the wedge-shaped member can be of relatively simple construction because a guide extending transversely of the direction of displacement and the pivoting plane is superfluous in the practice of the method according to the invention.

A further advantage of the present invention is that the jaws are retained in centred position by the wedge-shaped member, so that the position thereof can be properly controlled. This is advantageous for performing further operations, such as dividing a jaw in longitudinal direction or mechanically removing a jaw separated from the other jaw.

Yet another advantage of the present invention is that the head is displaced with its nose leading, which facilitates performing preceding or subsequent operations on the head, or at least the remainder thereof without the head having to be clamped anew.

In further elaboration of the method according to the invention, the jaws are automatically separated from each other by retaining one of the jaws and moving the other jaw further until the jaws are torn apart. Thus, separating the jaws from each other requires a very slight amount of work.

Retaining one of the jaws is preferably effected by means of a surface adjoining one of the abovementioned surfaces diverging in the direction of displacement, which adjoining surface extends at a greater angle relative to the direction of displacement than does said diverging surface. The jaw that is being retained remains hooked over the wedge-shaped member after being separated from the other jaw and can subsequently be removed in simple manner.

If the jaws are separated from each other manually, a higher yield of meat can be obtained. For that purpose, it is advantageous to divide the lower jaw approximately along its median plane. In the method according to the present invention, this is preferably done while the wedge-shaped member is disposed between the upper jaw and the lower jaw. Thus, the head can be further displaced with a continuous movement in the direction of displacement in which it has been passed over the wedge-shaped member, without suspension elements of the wedge-shaped member preventing this. The lower jaw halves pass on opposite sides along a portion of the suspension of the wedge-shaped member or a portion of the wedge-shaped member that is connected to the suspension.

A further advantage of dividing the lower jaw while the wedge-shaped member is disposed between the jaws is that for dividing the lower jaw it is not necessary to pass the head along a separate station in an appropriately fixed position and that precisely by tearing the jaws apart a stable fixation of the head is obtained.

Displacement of the head relative to the wedge-shaped member can naturally be effected both by moving the head relative to the wedge-shaped member retained in a fixed position and by moving the wedge-shaped member, whereby the head may or may not be retained in a fixed position.

The invention is further embodied in an apparatus according to claim 13 which is specifically adapted for carrying out the method according to the invention as defined in claim 1.

The invention will now be further illustrated and explained, by way of example, on the basis of some embodiments, with reference to the accompanying drawings, in which:
Fig. 1 is a side elevational view of a first portion of an embodiment of the invention;
Fig. 2 is a partly cutaway side elevational view of a further portion of the embodiment shown partly in Fig. 1;
Fig. 3 is an elevation similar to Fig. 2, in which the embodiment is shown in a further operative position;
Fig. 4 is an elevation similar to Fig. 1 of an end portion of the embodiment shown partly in Fig. 1; and
Fig. 5 is a top plan view of the embodiment shown partly in Fig. 1.

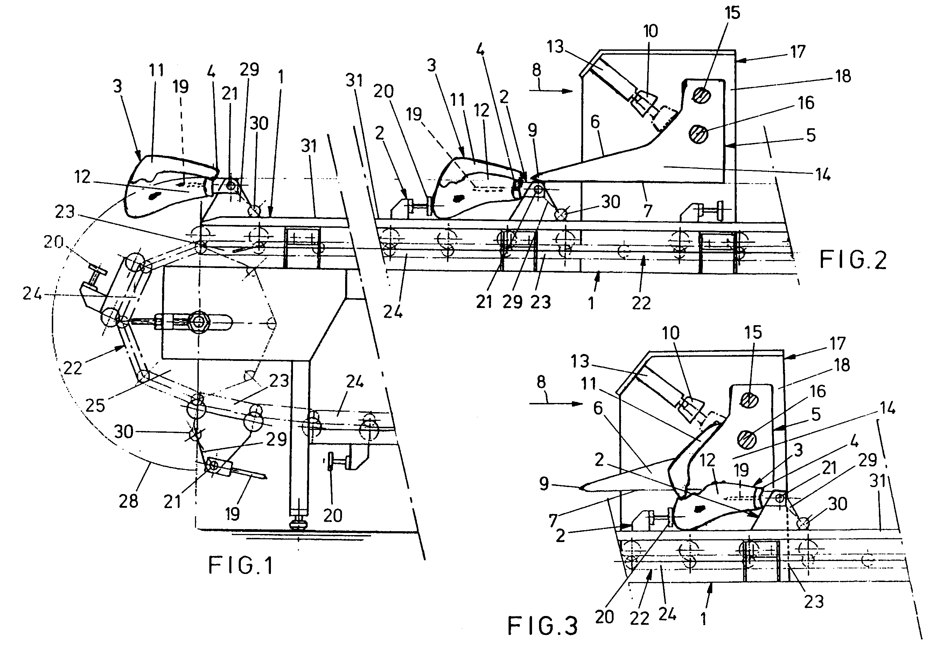

Figs 1-4 show a first portion, an intermediate portion and an end portion of an apparatus according to an embodiment of the invention. To clarify the method according to the invention, Figs 1-3 and 5 further show a pig's head during processing.

The apparatus comprises a conveyor track 1 with at least one holder 2 adapted to be moved along track 1, in which holder the head 3 can be retained to be displaced with its nose end 4 leading. Suspended opposite the conveyor track 1 is a wedge-shaped member 5 (Figs 2 and 3) having guide surfaces 6 and 7 facing away from each other, diverging in the direction of displacement of the holder 2, as indicated by an arrow 8. The wedge-shaped member 5 has a pointed end 9 at a slight distance from the path of the holder 2 for holding the head 3. The wedge-shaped member is suspended in a housing 17, shown in cutaway view in Figs 2 and 3.

The apparatus according to the present embodiment comprises a cutter 10 which can be moved up to a slight distance from a guide surface 6 of the wedge-shaped member 5 for dividing the lower jaw 11 approximately along its median plane while the wedge-shaped member 5 is disposed between the upper jaw 12 and the lower jaw 11.

The position in which the cutter 10 is disposed at a slight distance from the guide surface 6 of the wedge-shaped member 5 is indicated by a chain-dotted line. Naturally, instead of the cutter 10, any other separation means operative up to a slight distance from the wedge-shaped member 5 may be used, such as a saw or a punch cooperating with a cutting edge adjacent the guide surface, formed on the wedge-shaped member. The cutter 10 has the advantage that it can divide the lower jaw 11 in a very short time, that a minimal amount of loose material is obtained in the process and that the cutter 10 only needs to perform a simple back and forth movement, for which purpose a drive can be provided in simple manner.

The cutter 10 can also be omitted altogether. In that case, the lower jaw 11 can be separated from the upper jaw 12 by moving the holder 2 further. The lower jaw 11 will then be caught behind the portion of the wedge-shaped member 5 adjoining the guide surface 6 (opposite the cutter 10) and be torn loose from the upper jaw 12 when the holder 2 has been moved far enough. The lower jaw 11 can then be removed by means of conveyor means, arranged instead of the cutter, or by hand, if so desired.

The drive can be constructed as a pneumatic cylinder 13. Such a cylinder can simply be connected to a compressed air system to which any further tools arranged along the conveyor track can be connected as well.

The wedge-shaped member 5 shown in side elevational view has such dimensions perpendicular to the plane of the paper, that the head 3 can be moved over this wedge-shaped member 5 as far as the position shown in Fig. 3. A simple construction of the wedge-shaped member 5 can be obtained by making it plate-shaped, the thickness being chosen depending on the forces to be exerted on the wedge-shaped member 5 when the upper jaw 12 and the lower jaw 11 are being moved apart and the lower jaw 11 is being divided.

The method according to the invention can be practised with the embodiment shown of the apparatus according to the invention in the following manner. The head 3, with its nose end 4 leading, is arranged over the wedge-shaped member 5. The lower jaw 11 and the upper jaw 12 of the head 3 are passed along the guide surfaces 6 and 7, respectively, in such a way that the wedge-shaped member 5 is brought approximately centrally between the upper jaw 12 and the lower jaw 11, and the upper jaw 12 and the lower jaw 11 are forced apart. The lower jaw 11 is then divided approximately along its median plane while the wedge-shaped member 5 is disposed between the uppper jaw 12 and the lower jaw 11.

Forcing the lower jaw 11 and the upper jaw 12 apart can be effected through a relatively slight exertion of force in the direction of displacement, by virtue of the pointed angle between the guide surfaces 6,7 of the wedge-shaped member 5. During the process of forcing apart the lower jaw 11 and the upper jaw 12, a stable controlled position of the lower jaw 11 against the guide surface 6 is obtained, which is employed for dividing the lower jaw 11 along its median plane. For that purpose, it is sufficient to divide the jawbone connecting the right-hand part with the left-hand part at the front of the lower jaw 11. The other parts of the lower jaw consist of softer tissue, which, if so desired, can be divided upon further displacement of the head 3. Further, dividing the lower jaw while the head 3 is arranged over the wedge-shaped member 5 makes it possible to move the head 3 further in the direction in which is has been arranged over the wedge-shaped member 5, with the left half and the right half of the divided lower jaw 11 passing the wedge-shaped member 5 on opposite sides, so that they will not knock against the suspension of the wedge-shaped member 5 or any portion of the wedge-shaped member 5 connected with the suspension. This makes a continuous displacement of the head 3 possible, which is advantageous for efficient processing and requires only a simple drive.

The wedge-shaped member 5 according to the embodiment shown has a portion 14 disposed downstream of the diverging guide surfaces 6 and 7, which portion is connected to suspension means 15 and 16 mounted on opposite sides of the wedge-shaped member 5, which means 15 and 16 connect the wedge-shaped member 5 relative to the conveyor track 1. The suspension means 15 and 16 are shown in section and connect the wedge-shaped member 5 with sidewalls 18 of the housing 17. Of the suspension means 15 and 16, the lower suspension means 16 form stop means on opposite sides of the wedge-shaped member 5, arranged downstream of the guide surface 6 facing the separation member 10, viewed in the direction of displacement. Naturally, instead of designing the suspension means as stop means, it is possible to use separate stop means independent of the suspension means.

Upon further displacement of the head 3, after the halves of the lower jaw 11 have been separated from each other, the halves of the lower jaw 11 are separately moved further away from the upper jaw 12, owing to the fact that these lower jaw halves abut against the suspension means 16 and turn counter to the direction of displacement 8 until these lower jaw halves can pass under the suspension means 16. Upon further turning of the lower jaw halves, there is obtained a particularly effective laceration and stretching of the tendons interconnecting the lower and upper jaw, so that the lower jaw halves can subsequently be removed from the upper jaw very rapidly.

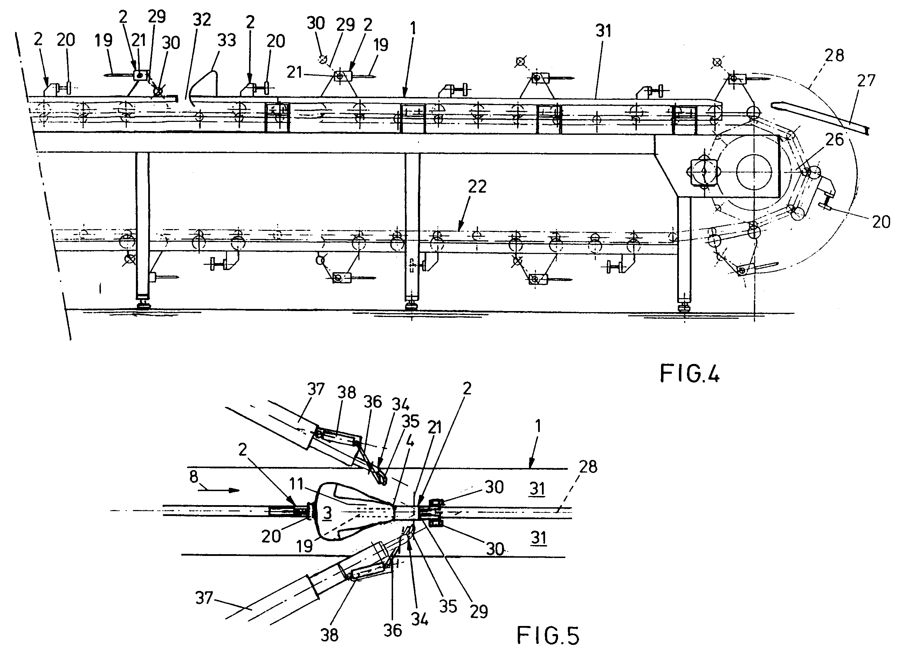

The holders 2 each comprise an insertion member 19 and a retaining member 20. The retaining member 20 can be moved away from the insertion member 19 of the respective holder 2 in the longitudinal direction of the conveyor track 1 counter to a spring force. The insertion member 19 can be pivoted about a pivot 21 directed transverse to the conveyor track 1 between a position where it is oriented upstream towards the corresponding retaining member 20 and a position where it is oriented downstream away from the corresponding retaining member 20 (see Fig. 4).

Before being passed over the wedge-shaped member 5, the head 3 is stuck onto the insertion member 19 by its upper jaw 12, approximately in the direction of displacement 8, whereafter the head 3 is secured onto the insertion member 19 by pressing it onto the insertion member 19 by means of the retaining member 20. By virtue of the resilient mobility of the retaining member 20, heads of varying length can be reliably stuck onto the insertion member and so retained. The head 3 is moved over the wedge-shaped member 5 by displacing the holder 2 with the insertion member 19 in the direction of displacement 8. At this time, the lower jaw 11 of the head 3 faces away from the conveyor track 1 so that the wedge-shaped member 5 can engage it to force upper jaw 12 from lower jaw 11. By virtue of the fact that the upper jaw 12 is stuck onto the insertion member 19 with its nose end leading, a stable anchoring of that nose end of the upper jaw 12 is obtained. The leading nose end 4 of the head 3 is thereby reliably retained in a position oriented in the direction of displacement and will not be pushed from its path as a result of the forces exerted counter to the direction of displacement 8 by the wedge-shaped member 5.

After the head 3 has passed the wedge-shaped member 5, the insertion member 19 can be pivoted about its pivot 21 into a position where it is directed downstream, so that the upper jaw 12 is turned away from the conveyor track 1 and the nose end 4 of the head is directed upstream. In this reversed position, the upper jaw 12 of the head 3 provides proper access for performing any further boning operations. Preferably, the side of the head 3 that is initially turned upwards is not turned down until the lower jaw halves of the head have been separated, so that separation of the lower jaw halves can be completed while the head is being moved with its lower jaw facing away from the conveyor track 1.

The insertion member 19 is fitted with two operating arms 29 which extend obliquely rearwardly and transversely to the pivot 21 and whose free end is fitted with a roller 30. Extending parallel to the conveyor track 1 are guideways 31, the rollers 30 being disposed in positions adjoining the corresponding guideways 31 when the insertion member 19 is directed upstream.

By virtue of the fact that the rollers 30 are disposed in positions adjoining the corresponding guideways 31, the insertion member 19 is prevented from pivoting about the pivot 21, so that the insertion member is stably retained in a position directed upstream. This is important because when the wedge-shaped member 5 is being passed, the upper jaw 12 may be subject to forces directed away from the conveyor track 1. To limit such forces exerted on the upper jaw 12, the guide surface 7 facing the conveyor track 1 extends parallel to the conveyor track 1. The stable position of the insertion member 19 is further advantageous for manually performing further boning operations when the head 3 has passed the wedge-shaped member 5 and is moved further along the conveyor track 1. To screen drive means arranged under the guideway 31, the guideway is of wider design than is strictly necessary for guiding the rollers 30. The guideway at the same time forms a work face for manually performing boning operations on the head 3 while it is being moved along the conveyor track.

Downstream of the wedge-shaped member 5, an opening 32 is provided in the guideway 31. Arranged behind the opening 32 is an engagement member 33 adapted to engage the rollers 31 upon passage of the corresponding insertion member 19, thereby causing the operating arm 29 to pivot about pivot 21 through approximately half a turn, so that the reversal of head 3 is effected.

When head 3 pivots, the resilient retention of head 3 on the insertion member 19 is terminated, so that the head can be removed directly from the insertion member 19 at the end of the conveyor track.

The insertion member 19 consists of two pins, their relative distance being chosen to correspond with the relative distance between the nostrils of the type of heads to be processed. By sticking the head 3 at the beginning of the conveyor track 1 onto the insertion member 19 in such a manner that the pins are inserted into the nostrils, a stable position of the nose end 4 of the head 3 relative to the holder 2 and the conveyor track 1 is obtained. Thus, there is obtained a reliable positioning of the head 3 over the wedge-shaped member 5 whose pointed end 9 must be brought between the lower jaw 11 and the upper jaw 12 of the head 3.

The conveyor track 1 of the apparatus according to the embodiment shown comprises a conveyor chain 22 mounted onto bend wheels 25 and 26 arranged at the end of the conveyor track 1. The insertion member 19 and the retaining member 20 are each connected with a separate link 23 and 24, respectively, of the conveyor chain 22, so that they are each movable along an endless conveyor path. The path of travel of the insertion members 19 is indicated by the reference numeral 28. The end of the conveyor track 1 disposed downstream comprises a guide chute 27 which extends beyond the bend wheel 26, obliquely downwards relative to the produced part of the conveyor track 1, comprises a recess (not visible in the figure) permitting the insertion members 19 to pass and intersects at an acute angle a portion of the path of travel 28 of the insertion members where it curves downwardly in the area of the bend wheel 26.

When the head 3 stuck onto the insertion member 19 reaches the area of the bend wheel 26, where the path of travel 28 follows a semicircular path around the bend wheel 26, the head 3 is guided obliquely downwards through the guide chute 27 away from the path of travel of the insertion member 19. The insertion member 19 can pivot freely, so that the head is removed from the insertion member 19 with a slight exertion of force.

If it is desired for the head to be automatically removed over a greater distance, it is also possible, when the head reaches the area of the bend wheel 26, to arrange for suitable gripper members to engage the head and to move these gripper members in such a way that the head is removed from the insertion member 19.

For the purpose of processing heads of pigs, the apparatus may comprise means for pulling the mask off the upper jaw 12. According to the embodiment of the invention shown, these means comprise facing clamps 34 (Fig. 5) arranged on opposite sides of the conveyor track 1, which clamps are disposed to the side of an area between the path 28 of the insertion member 19 and the guideway 31. The clamps 34 can be moved to and from the conveyor track 1 and each have a fixed jaw 35 disposed downstream whose surface facing the other jaw 36 extends substantially obliquely, downstream, hook-shaped, curving towards the conveyor track 1 and facing the path 28 of the insertion member 19.

For moving the clamps 34 to and from the conveyor track 1, they are each mounted on a pneumatic cylinder 37 directed obliquely towards the conveyor track 1, viewed in the direction of displacement. The other clamp jaws 36 are each connected to a further pneumatic cylinder 38 and can be moved relative to the clamp jaws 35 disposed downstream and fixedly connected to said obliquely directed pneumatic cylinder 37. Although the corresponding cylinders 37, 38 on opposite sides of the conveyor track 1 are preferably operated simultaneously, for the sake of clarity, the clamp 34 - on the right-hand side viewed in the direction of displacement 8 - is shown in a position adjacent the conveyor track 1, while the opposite clamp 34 is shown in a position moved away from the conveyor track.

Before the head 3 is placed onto the insertion member 19, the mask is partly cut loose from the nose. It is thus possible to make the incisions in such a way that gristle of the nose remains connected to the mask, so that it can be separated when the mask is further processed. Then the head 3 is placed on the insertion member 19 and during displacement of the head 3, clamps 35 engage the parts of the mask that have been cut loose and pull the mask in an oblique direction towards the rear relative to the direction of displacement 8. Separating the mask of the head 3 is effected by cutting the mask loose from the head 3 while said clamps 35 are pulling the mask. Cutting the mask loose can be effected mechanically or manually, manual removal to date still giving the larger yield of meat.

The clamp 35 can engage a mask because the clamp 35, upon approach of the head 3, is retained in a position adjacent the conveyor track 1, the movable clamp jaw 36 being displaced away from the fixed clamp jaw 35. When a portion of the mask that has been cut loose reaches the fixed clamp jaw 35 on the corresponding side of the head 3, it is passed between the clamp jaw 35 and the movable clamp jaw 36 due to the hook-shaped configuration curving towards the conveyor track 1 of the fixed clamp jaw 35. Then the movable clamp jaw 36 is moved towards the fixed clamp jaw 35, so that the portion of the mask that has been cut loose is clamped in the clamp 34. During the further movement of the head 3 in the direction of displacement 8, the clamp 34 is moved obliquely counter to the direction of displacement 8, away from the conveyor track 1, so that the mask is subjected to pulling action.

The oblique displacement of the clamps 34 counter to the direction of displacement 8 while the mask is being pulled at, has the advantage that pulling the mask can be performed with a relatively high speed. Naturally, it is also possible to move the clamps only transversely to the conveyor track to permit the wider rearward portion of the head to pass and to effect pulling by moving the head.

## Claims

1. A method of boning a head of a slaughtered piece of livestock, such as a pig or a cow, in, which
the head (3) is displaced relatively to means for forcing apart an upper jaw part (12) and a lower jaw part (11) of the head (3) along a track (1) with its nose end leading,
the upper jaw part (12) and the lower jaw part (11) of the head (3) are forced apart as the head (3) passes said means,
**characterized in that**
the head (3) is displaced substantially in its entirety,
said means are provided in form of a wedge-shaped member (5) having guide surfaces (6, 7) diverging in the direction of displacement of the head (3), and
the forcing apart of the upper jaw part (12) and the lower jaw part (11) is carried out by bringing the wedge-shaped member (5) approximately centrally between the upper jaw part (12) and the lower jaw part (11) and displacing the upper jaw part (12) and the lower jaw part (11) along the guide surfaces (6, 7) of the wedge-shaped member (5), such that the jaws parts (11, 12) are retained in centred position to the wedge-shaped member (5).

2. A method according to claim 1, characterized in that the jaws (11, 12) are separated from each other by retaining one of the jaws (11) and displacing the other jaw (12) further until the jaws (11, 12) are torn apart.

3. A method according to claim 2, characterized in that retaining one of the jaws (11) is effected by means of a surface adjoining one of said guide surfaces (6) diverging in the direction of displacement, which adjoining surface extends at a greater angle relative to the direction of displacement than does the diverging surface (6) which it adjoins.

4. A method according to claim 1, characterized in that the lower jaw (11) is divided approximately along its median plane while the wedge-shaped member (5) is disposed between the upper jaw (12) and the lower jaw (11).

5. A method according to claim 4, characterized in that dividing the lower jaw (11) is effected by splitting it, the wedge-shaped member (5) serving as a stop member.

6. A method according to claim 5, characterized in that splitting is effected by displacing a cutter (10) towards the wedge (5) by means of a pneumatic drive (13).

7. A method according to any one of claims 4-6, characterized in that the lower jaw halves (11), after being separated, are separately displaced further away from the upper jaw (12).

8. A method according to any one of the preceding claims, characterized in that the head (3) is displaced with the lower jaw (11) turned upwards.

9. A method according to claim 8, characterized in that, after the lower jaw halves (11) have been separated from the head (3), the side of the head (3) that was initially turned upwards is turned downwards.

10. A method according to claim 9, characterized in that the head (3), before it is displaced over the wedge-shaped member (5), is stuck onto an insertion member (19) by its upper jaw (12), oriented approximately in the direction of displacement, whereafter the head (3) is secured onto said insertion member (19) by resiliently pressing it onto the insertion member (19) in the direction of displacement and the head (3) is displaced over the wedge-shaped member (5) by displacing the insertion member (19) in the direction of displacement.

11. A method according to claim 10, characterized in that the turning of the head (3) occurs about an axis (21) transverse to the direction of displacement and the head's being resiliently pressed onto the insertion member (19) is terminated when it is turned.

12. A method according to any one of the preceding claims, characterized in that, before the head (3) is placed onto the insertion member (19), the mask is partly cut loose from the nose and that after the head (3) has been placed on the insertion member (19), while the head (3) is being displaced, clamps (34) engage the parts of the mask that have been cut loose and pull the mask in an oblique rearward direction relative to the direction of displacement, the separation of the mask from the head (3) being effected by manually cutting the mask loose from the head (3) while said clamps (34) pull the mask.

13. An apparatus for carrying out the method according to any one of the preceding claims, comprising
a conveyor track (1) with at least one holder (2) movable along the track, in which holder the head (3) can be held, and
a wedge-shaped member suspended opposite the conveyor track, which wedge-shaped member (5) comprises guide surfaces (6, 7) facing away from each other and diverging in the direction of displacement of the holder (2) and has a pointed end (9) at a slight distance from the track (1) of the holder (2) for holding the head, the holder (2) being arranged to hold a substantially entire head (3) with its nose end approximately in the direction of displacement, such that jaw parts (11, 12) of a head (3) moving along the wedge-shaped member (5) are retained in centred position to the wedge-shaped member (5).

14. An apparatus according to claim 13, characterized by retaining means for retaining one of the jaws (11), which retaining means are arranged adjacent an end of one of the guide surfaces (6) that is disposed downstream.

15. An apparatus according to claim 14, characterized in that the retaining means are constructed as a surface adjoining one of the guide surfaces (6), which adjoining surface extends at a greater angle relative to the direction of displacement than does the guide surface (6) which it adjoins.

16. An apparatus according to claim 13, characterized by a separation member (10) which can be moved at least to within a slight distance of the wedge-shaped member (5) for dividing the lower jaw (11) approximately along its median plane while the wedge-shaped member (5) is disposed between the upper jaw (12) and the lower jaw (11).

17. An apparatus according to claim 16, characterized in that the separation member (10) is constructed as a cutter which is connected to a pneumatic cylinder (13) for moving said cutter (10) towards the wedge-shaped member (5).

18. An apparatus according to claim 16 or 17, characterized in that the wedge-shaped member (5) comprises a portion disposed downstream of the diverging guide surfaces (6, 7), which portion is connected to suspension means (15, 16) by which the wedge-shaped member (5) is secured relative to the conveyor track (1), and which on opposite sides comprises stop means (15, 16) which, viewed in the direction of the conveyor track (1), are disposed downstream of the guide surface (6, 7) facing the separation member (10).

19. An apparatus according to claim 18, characterized in that at least a part of the suspension means (15, 16) form the stop means.

20. An apparatus according to any one of claims 13-19, characterized in that the holders (2) each comprise an insertion member (19) and a retaining member (20), which retaining member (20) can be moved away from the insertion member (19) of the respective holder (2) in the longitudinal direction of the conveyor track (1), counter to a spring force, the insertion member (19) being pivotable about a pivot (21) directed transverse to the conveyor (1), between a position where it is directed upstream towards the corresponding retaining member (20) and a position where it is directed downstream away from the corresponding retaining member (20).

21. An apparatus according to claim 20, characterized in that the insertion member (19) is fitted with at least one operating arm (29) extending obliquely rearwardly and transversely to said pivot (21) and whose free end comprises a roller (30), and that at least one guideway (31) extends parallel to the conveyor track (1), the roller (30) being disposed in a position adjoining the guideway (31) when the insertion member (19) is directed upstream.

22. An apparatus according to claim 21, characterized in that downstream of the wedge-shaped member (5) an opening (32) is provided in the guideway (31), an engagement member (33) being arranged behind said opening (32), which engagement member (33), upon passage of the insertion member (19), can engage the corresponding roller (30) and cause the operating arm (29) to pivot about the pivot (21) through approximately half a turn.

23. An apparatus according to claim 21 or 22, characterized in that the conveyor track (1) comprises a conveyor chain (22) suspended around bend wheels (26) mounted at the ends of the conveyor track (1), the insertion member (19) and the retaining member (20) each being connected to a separate link of the conveyor chain (22) and each being movable along an endless conveyor path, the downstream end of the conveyor track (1) comprising a guide chute (27) extending beyond the bend wheel of the conveyor chain, the chute extending obliquely downwardly relative to the produced part of the guideway, intersects at an acute angle the portion of the path of travel of the insertion member (19) where it curves downwardly in the area of the turning point of the conveyor chain (22), and comprises a recess for permitting the insertion member to pass.

24. An apparatus according to any one of claims 13-23, characterized in that facing clamps (34) are arranged on opposite sides of the conveyor track (1), which clamps (34) are disposed to the side of an area between the path of the insertion member (19) and a guideway (31) parallel to the conveyor track (1), which clamps (34) can be moved to and from the conveyor track (1) and each comprise a fixed jaw (35) disposed downstream whose surface facing the other jaw (36) extends substantially obliquely downstream, hook-shaped, curving towards the conveyor track (1) and faces the path of the insertion member (19).

## Patentansprüche

1. Verfahren zum Entbeinen des Kopfes eines geschlachteten Tieres, wie eines Schweins oder einer Kuh, bei dem
der Kopf (3) relativ zu Mitteln zum Auseinanderdrücken eines Oberkiefers (12) und eines Unterkiefers (11) des Kopfes (3) entlang einer Bahn (1) mit der Schnauze in Richtung der Bewegung liegend verschoben wird, und
der Oberkiefer (12) und der Unterkiefer (11) des Kopfes (3) auseinandergedrückt werden, während der Kopf (3) diese Mittel passiert,
dadurch gekennzeichnet, daß
der Kopf (3) als Ganzes verschoben wird,
die Mittel in Form eines keilförmigen Teils (5) mit Führungsflächen (6, 7) vorliegen, die in Vorschubrichtung des Kopfes (3) divergieren, und
das Auseinanderdrücken des Oberkiefers (12) und des Unterkiefers (11) derart ausgeführt wird, daß der Keil (5) annähernd zentrisch zwischen den Oberkiefer (12) und den Unterkiefer (11) gebracht und der Oberkiefer (12) und der Unterkiefer (11) entlang den Führungsflächen (6, 7) des Keiles (9) geschoben werden, so daß die Kiefer (11, 12) in zentrierter Position zum Keil (5) verbleiben.

2. Verfahren nach Anspruch 1, dadurch gekennzeichnet, daß die Kiefer (11, 12) voneinander getrennt werden, indem einer der Kiefer (11) festgehalten und der andere Kiefer (12) solange weitergeschoben wird, bis die Kiefer (11, 12) auseinandergerissen sind.

3. Verfahren nach Anspruch 2, dadurch gekennzeichnet, daß das Halten eines der Kiefer (11) durch eine an eine der in Richtung des Vorschubs divergierenden Führungsflächen (6) angrenzende Oberfläche, die sich in einem größeren Winkel relativ zur Schubrichtung erstreckt als die angrenzende divergierende Führungsfläche (6), erreicht wird.

4. Verfahren nach Anspruch 1, dadurch gekennzeichnet, daß der Unterkiefer (11) etwa entlang seiner Mittelebene geteilt wird, während der Keil (5) zwischen den Oberkiefer (12) und den Unterkiefer (11) geschoben wird.

5. Verfahren nach Anspruch 4, dadurch gekennzeichnet, daß das Teilen des Unterkiefers (11) durch Spalten geschieht, wobei der Keil (5) als Anschlag dient.

6. Verfahren nach Anspruch 5, dadurch gekennzeichnet, daß das Spalten erreicht wird, indem ein Schneidwerkzeug (10) mittels eines pneumatischen Antriebs (13) gegen den Keil (5) bewegt wird.

7. Verfahren nach einem der Ansprüche 4 bis 6, dadurch gekennzeichnet, daß die Hälften des Unterkiefers (11) nach ihrer Trennung weg von dem Oberkiefer (12) gesondert abgelegt werden.

8. Verfahren nach einem der vorangehenden Ansprüche, dadurch gekennzeichnet, daß der Kopf (3) mit obenliegendem Unterkiefer (11) verschoben wird.

9. Verfahren nach Anspruch 8, dadurch gekennzeichnet, daß nach Trennung der Unterkieferhälften (11) vom Kopf (3) die Seite des Kopfes (3), die ursprünglich nach oben gerichtet wurde, nach unten gedreht wird.

10. Verfahren nach Anspruch 9, dadurch gekennzeichnet, daß der Kopf (3), bevor er über den Keil (5) geschoben wird, mit dem Oberkiefer (12) etwa in Richtung des Vorschubs auf ein Einsatzstück (19) gesteckt wird, wonach der Kopf (3) auf diesem Einsatzstück (19) unter nachgiebigem Drücken des Kopfes auf das Einsatzstück (19) in Richtung des Vorschubs auf dem Einsatzstück (19) gesichert und der Kopf (3) durch Bewegen des Einsatzstücks (19) in Richtung des Vorschubs über den Keil (5) geschoben wird.

11. Verfahren nach Anspruch 10, dadurch gekennzeichnet, daß das Umdrehen des Kopfes (3) um eine quer zur Vorschubrichtung verlaufende Achse (21) erfolgt, und daß das elastische Sichern des Kopfes auf dem Einsatzstück (19) beendet wird, wenn der Kopf gedreht wird.

12. Verfahren nach einem der vorangehenden Ansprüche, dadurch gekennzeichnet, daß vor dem Plazieren des Kopfes (3) auf dem Einsatzstück (19) das Gewebe (Abdeckung) teilweise von der Nase losgeschnitten wird, und daß nach dem Plazieren des Kopfes (3) auf dem Einsatzstück (19) während des Vorschubs des Kopfes (3) Klammern (34) die Teile des Gewebes erfassen, die losgeschnitten wurden, und das Gewebe relativ zur Vorschubrichtung schräg nach hinten ziehen, wobei das Trennen des Gewebes vom Kopf (3) durch manuelles Losschneiden vom Kopf bei gleichzeitigem Ziehen des Gewebes durch die Klammern (34) geschieht.

13. Vorrichtung zum Durchführen des Verfahrens nach einem der vorangehenden Ansprüche, bestehend aus
einer Förderbahn (1) mit mindestens einem entlang dieser bewegbaren Halter (2), der den Kopf (3) halten kann, und
einem oberhalb der Förderbahn aufgehängten keilförmigen Teil (5), das Führungsflächen (6, 7), die einander abgewandt sind und in Vorschubrichtung des Halters (2) divergieren, sowie ein spitzes Ende (9) besitzt, das sich in einer geringen Entfernung von der Bahn (1) des Halters (2) für den Kopf (3) befindet, wobei der Halter (2) in der Lage ist, einen kompletten Kopf (3) mit dessen Schnauze ungefähr in Vorschubrichtung zu halten, so daß Kieferteile (11, 12) eines entlang dem Keil (5) bewegten Kopfes (3) in zentrierter Lage zum Keil (5) gehalten werden.

14. Vorrichtung nach Anspruch 13, gekennzeichnet durch Stützmittel für einen der Kiefer (11), die benachbart dem "stromabwärts" liegenden Ende einer der Führungsflächen (6) angeordnet sind.

15. Vorrichtung nach Anspruch 14, dadurch gekennzeichnet, daß die Stützmittel aus einer sich an die Führungsfläche (6) anschließenden Fläche bestehen, wobei die Anschlußfläche unter einem größeren Winkel zur Vorschubrichtung verläuft als die Führungsfläche (6), der sie sich anschließt.

16. Vorrichtung nach Anspruch 13, gekennzeichnet durch ein Trenngerät (10) zum Teilen eines Unterkiefers (11) ungefähr entlang seiner Mittelebene, das zumindest bis auf eine geringe Distanz an den Keil (5) heranbewegt werden kann, während der Keil (5) sich zwischen dem Oberkiefer (12) und dem Unterkiefer (11) befindet.

17. Vorrichtung nach Anspruch 16, dadurch gekennzeichnet, daß das Trenngerät (10) als ein Schneidwerkzeug ausgebildet ist, das zu seiner Bewegung auf den Keil (5) hin mit einem pneumatischen Zylinder (13) verbunden ist.

18. Vorrichtung nach Anspruch 16 oder 17, dadurch gekennzeichnet, daß der Keil (5) in Vorschubrichtung hinter den Führungsflächen (6, 7) einen mit einer Aufhängung (15, 16) verbundenen Bereich besitzt, durch die der Keil (5) relativ zur Förderbahn (1) festgelegt wird und die auf gegenüberliegenden Seiten Anschläge (15, 16) aufweist, die in Richtung der Förderbahn (1) gesehen "stromabwärts" hinter den Führungsflächen (6, 7) dem Trenngerät (10) zugewandt angeordnet sind.

19. Vorrichtung nach Anspruch 18, dadurch gekennzeichnet, daß zumindest ein Teil der Aufhängung (15, 16) die Anschläge bildet.

20. Vorrichtung nach einem der Ansprüche 13 bis 19, dadurch gekennzeichnet, daß die Halter (2) jeweils ein Einsatzstück (19) und ein Stützteil (20) besitzen, das vom Einsatzstück (19) des jeweiligen Halters (20) entgegen einer Federkraft in Längsrichtung der Förderbahn (1) wegbewegt werden kann, und daß das Einsatzstück (19) um einen quer zur Bahn (1) ausgerichteten Zapfen (21) zwischen einer der Bewegungsrichtung entgegengerichteten, auf das zugehörige Stützteil (20) zuweisende Position und einer in Bewegungsrichtung weg vom zugehörigen Stützteil (20) weisenden Position verstellt werden kann.

21. Vorrichtung nach Anspruch 20, dadurch gekennzeichnet, daß das Einsatzstück (19) mit mindestens einem Steuerhebel (29) ausgerüstet ist, der sich schräg nach hinten und quer zum Zapfen (21) erstreckt und dessen freies Ende eine Walze (30) trägt, und daß mindestens eine Führungsbahn (31) parallel zur Förderbahn (1) verläuft, wobei die Walze (30) an der Führungsbahn (31) anliegt, wenn das Einsatzstück (19) "stromaufwärts" (entgegen der Vorschubrichtung) gerichtet ist.

22. Vorrichtung nach Anspruch 21, dadurch gekennzeichnet, daß sich in Vorschubrichtung hinter dem Keil (5) in der Führungsbahn (31) ein Durchtritt (32) und hinter diesem ein Steuerglied (33) befinden, das beim Passieren des Einsatzstücks (19) die zugehörige Walze (30) ergreifen kann und dafür sorgt, daß der Steuerhebel (29) um den Zapfen (21) um ungefähr eine halbe Umdrehung schwenkt.

23. Vorrichtung nach Anspruch 21 oder 22, dadurch gekennzeichnet, daß die Förderbahn (1) eine Förderkette (22) aufweist, die über an den Enden der Förderbahn (1) angebrachte Umlenkräder (26) hängend gehalten werden, das Einsatzstück (19) und das Stützteil (20) jeweils mit einem gesonderten Kettenglied verbunden und je entlang eines endlosen Förderweges zu bewegen sind, wobei das "stromab" gelegene Ende der Förderbahn (1) eine Führungsrutsche (27) besitzt, die sich über dem Umlenkrad der Förderkette schräg nach unten relativ zum verlängerten Teil der Führungsbahn erstreckt, den Teil des Umlaufweges des Einsatzstücks (19) unter einem spitzen Winkel schneidet, an dem es im Bereich des Umkehrpunktes der Förderkette (22) nach unten schwenkt, und eine Ausnehmung für das Passieren des Einsatzstücks besitzt.

24. Vorrichtung nach einem der Ansprüche 13 bis 23, dadurch gekennzeichnet, daß Klammern (34) auf gegenüberliegenden Seiten der Förderbahn (1) angebracht sind, die sich seitlich eines Bereichs zwischen dem Weg des Einsatzstücks (19) und einer Führungsbahn (31) parallel zur Förderbahn (1) befinden und auf die Förderbahn (1) zu- und von dieser wegbewegt werden können, wobei jede Klammer eine feststehende Backe (35) "stromab" mit ihrer Aktivfläche der anderen Backe (36) zugerichtet schräg "stromab" verlaufend, hakenförmig zur Förderbahn (1) hin gebogen und zur Bahn des Einsatzstücks (19) gerichtet ist.

## Revendications

1. Procédé permettant de désosser la tête d'une pièce de bétail abattue, telle qu'un cochon ou une vache, dans lequel
la tête (3) est déplacée relativement à des moyens pour séparer à force une mâchoire supérieure (12) d'une mâchoire inférieure (11) le long d'un parcours (1), le museau en avant,
la mâchoire supérieure (12) et la mâchoire inférieure (11) de la tête (3) sont séparées à force pendant que la tête (3) passe lesdits moyens,
caractérisé en ce que
la téte (3) est déplacée substantiellement dans sa totalité,
lesdits moyens sont prévus en forme d'un membre cunéiforme (5) muni de surfaces de guidage (6, 7) divergentes dans la direction de déplacement de la tête (3) et
la mâchoire supérieure (12) et la mâchoire inférieure (11) sont séparées à force par mettre le membre cunéiforme (5) approximativement au centre entre la mâchoire supérieure (12) et la mâchoire inférieure (11) et déplacer la mâchoire supérieure (12) et la mâchoire inférieure (11) le long des surfaces de guidage (6, 7) du membre cunéiforme (5), tellement que les mâchoires (11, 12) sont retenues dans la position centrée relativement au membre cunéiforme (5).

2. Procédé selon la revendication 1, caractérisé en ce que les mâchoires (11, 12) sont séparées l'une de l'autre par retenir l'une des mâchoires (11) et déplacer l'autre mâchoire (12) jusqu'au moment où les mâchoires (11, 12) sont arrachées à part.

3. Procédé selon la revendication 2, caractérisé en ce que l'une des mâchoires (11) est retenue au moyen d'une surface ajoutée à l'une desdites surfaces de guidage (6) divergentes dans la direction de déplacement, ladite surface ajoutée s'étendant à un angle plus grand relativement à la direction de déplacement que la surface divergente (6) à laquelle elle est ajoutée.

4. Procédé selon la revendication 1, caractérisé en ce que la mâchoire inférieure (11) est divisée approximativement le long du plan médian pendant que le membre cunéiforme (5) est disposé entre la mâchoire supérieure (12) et la mâchoire inférieure (11).

5. Procédé selon la revendication 4, caractérisé en ce que la mâchoire inférieure (11) est divisée par la fendre, le membre cunéiforme (5) servant de membre d'arrêt.

6. Procédé selon la revendication 5, caractérisé en ce que le fendage est effectué par déplacer un ciseau (10) vers le coin (5) au moyen d'une commande pneumatique (13).

7. Procédé selon l'une quelconque des revendications 4 à 6, caractérisé en ce que les mâchoires inférieures (11), après être séparées, sont déplacées séparément plus loin de la mâchoire supérieure (12).

8. Procédé selon l'une quelconque des revendications précédentes, caractérisé en ce que la tête (3) est déplacée la mâchoire inférieure (11) tournée en haut.

9. Procédé selon la revendication 8, caractérisé en ce que, après la séparation des mâchoires inférieures (11) de la tête (3), le côté de la tête (3) initialement tourné en haut est tourné en bas.

10. Procédé selon la revendication 9, caractérisé en ce que la tête (3), avant de la déplacer le long du membre cunéiforme (5), est placée sur un membre d'insertion (19) par sa mâchoire supérieure (12), orientée approximativement dans la direction de déplacement, après quoi la tête (3) est fixée sur ledit membre d'insertion (19) par la presser élastiquement sur le membre d'insertion (19) dans la direction de déplacement et la tête (3) est déplacée le long du membre cunéiforme (5) par déplacer le membre d'insertion (19) dans la direction de déplacement.

11. Procédé selon la revendication 10, caractérisé en ce que la tête (3) est tournée autour d'un axe (21) en travers à la direction de déplacement et la pression elastique de la tête (3) sur le membre d'insertion (19) est terminée quand elle est tournée.

12. Procédé selon l'une quelconque des revendications précédentes, caractérisé en ce que, avant de placer la tête (3) sur le membre d'insertion (19), le masque est partiellement détaché du museau et que, après avoir placé la tête (3) sur le membre d'insertion (19), pendant que la tête (3) est déplacée, des pinces (34) agrippent les parties du masque qui ont été détachées et tirent le masque dans une direction oblique en arrière relativement à la direction de déplacement, le masque de la tête (3) étant séparé par détachant manuellement le masque de la tête (3) pendant que lesdites pinces (34) tirent le masque.

13. Appareil pour effectuer le procédé selon l'une quelconque des revendications précédentes, comprenant
un chemin de transport (1) muni au moins d'un porte-tête (2) mobile le long du chemin, lequel porte-tête pouvant tenir la tête (3), et
un membre cunéiforme suspendu en face du chemin de transport, ledit membre cunéiforme (5) comprenant des surfaces de guidage (6, 7) tournées dans des directions opposées et divergentes dans la direction de déplacement du porte-tête (2) et ayant une extrémité pointue (9) à une faible distance du chemin (1) du porte-tête (2) pour tenir la tête, ledit porte-tête (2) étant arrangé à tenir une tête substantiellement complète (3), le museau approximativement dans la direction de déplacement, tellement que des mâchoires (11, 12) d'une tête (3) déplacée le long du membre cunéiforme (5) sont retenues dans la position centrée relativement au membre cunéiforme (5).

14. Appareil selon la revendication 13, caractérisé par des moyens de retenue pour retenir l'une des mâchoires (11), lesdits moyens de retenue étant arrangés près d'une extrémité de l'une des surfaces de guidage (6) qui est disposée en aval.

15. Appareil selon la revendication 14, caractérisé en ce que les moyens de retenue sont construits comme une surface ajoutée à l'une des surfaces de guidage (6), ladite surface ajoutée s'étendant à un angle plus grand relativement à la direction de déplacement que la surface de guidage (6) à laquelle elle est ajoutée.

16. Appareil selon la revendication 13, caractérisé par un membre de séparation (10) qui peut être déplacé au moins jusqu'à une faible distance du membre cunéiforme (5) pour diviser la mâchoire inférieure (11) approximativement le long du plan médian pendant que le membre cunéiforme (5) est disposé entre la mâchoire supérieure (12) et la mâchoire inférieure (11).

17. Appareil selon la revendication 16, caractérisé en ce que le membre de séparation (10) est construit comme un ciseau qui est relié à un cylindre pneumatique (19) pour le mouvement dudit ciseau (10) vers le membre cunéiforme (5).

18. Appareil selon la revendication 16 ou 17, caractérisé en ce que le membre cunéiforme (5) comprend une partie disposée en aval de la surface de guidage divergente (6, 7), ladite partie étant reliée à des moyens de suspension (15, 16) par lesquelles le membre cunéiforme (5) est fixé relativement au chemin de transport (1) et comprenant des côtés opposés des moyens d'arrêt (15, 16) qui, vus dans la direction du chemin de transport (1), sont disposés en aval de la surface de guidage (6, 7) tournée vers le membre de séparation (10).

19. Appareil selon la revendication 18, caractérisé en ce qu'au moins une partie des moyens de suspension (15, 16) forme les moyens d'arrêt.

20. Appareil selon l'une quelconque des revendications 13 à 19, caractérisé en ce que chaque porte-tête (2) comprend un membre d'insertion (19) et un membre de retenue (20), ledit membre de retenue (20) pouvant être éloigné du membre d'insertion (19) du porte-tête respectif (2) dans la direction longitudinale du chemin de transport (1), à l'encontre de l'action d'un ressort, le membre d'insertion (19) pouvant être tourné autour d'un pivot (21) dirigé en travers au transporteur (1) entre une position dans laquelle il est dirigé en amont vers le membre de retenue correspondant (20) et une position dans laquelle il est éloigné en aval du membre de retenue correspondant (20).

21. Appareil selon la revendication 20, caractérisé en ce que le membre d'insertion (19) est muni au moins d'un bras de commande (29) s'étendant obliquement en arrière et en travers audit pivot (21) dont l'extrémité libre comprend une roue (30) et qu'au moins un chemin de guidage (31) s'étend parallèlement au chemin de transport (1), ladite roue (30) étant disposée dans une position auprès du chemin de guidage (31) quand le membre d'insertion (19) est dirigé en amont.

22. Appareil selon la revendication 21, caractérisé en ce qu'en aval du membre cunéiforme (5) une ouverture (32) est prévue dans le chemin de guidage (31), un membre d' agrippement (33) étant arrangé derrière ladite ouverture (32), ledit membre d'agrippement (33), pendant le passage du membre d'insertion (19), pouvant agripper la roue correspondante (30) et faire tourner le bras de commande (29) autour du pivot (21) approximativement d'un demi-tour.

23. Appareil selon la revendication 21 ou 22, caractérisé en ce que le chemin de transport (1) comprend une chaîne transporteuse (22) suspendue autour des galets de renvoi (26) montés aux extrémités du chemin de transport (1), chaque membre d'insertion (19) et chaque membre de retenue (20) étant reliés à une pièce de jonction séparée de la chaîne transporteuse (22) et chacun étant mobile le long d'un chemin de transport sans fin, l'extrémité en aval du chemin de transport (1) comprenant une gouttière transporteuse (27) qui s'étend après le galet de renvoi de la chaîne transporteuse, la gouttière s'étendant obliquement en bas relativement au prolongement du chemin de guidage, coupe à angle vif la partie du trajet de transport du membre d'insertion (19) où il dévie en bas dans la zone du point de retour de la chaîne transporteuse (22) et comprend un évidement pour permettre le passage du membre d'insertion.

24. Appareil selon l'une quelconque des revendications 13 à 23, caractérisé en ce que des pinces (34) situées en regard sont arrangées des deux côtés du chemin de transport (1), lesdites pinces (34) étant disposées du côté d'une zone entre le trajet du membre d'insertion (19) et un chemin de guidage (31) parallèle au chemin de transport (1), lesdites pinces (34) étant mobiles en va-et-vient relativement au chemin de transport (1), chacun comprenant une mâchoire fixe (35) disposée en aval dont la surface située en regard de l'autre mâchoire (36) s'étend substantiellement obliquement en aval, à crochet, courbée vers le chemin de transport (1), et est située en regard du trajet du membre d'insertion (19).
